# EUROPEAN PATENT APPLICATION

(11) **EP 4 425 487 A1**
(43) Date of publication of application: **04.09.2024**
(21) Application number: 23210894.4
(22) Date of filing: 20.11.2023
(51) Int. Cl.: G10L 15/22, G10L 25/78, G10L 25/21, G10L 25/60, G06F 1/16, H04N 5/77, H04N 7/18, H02J 7/00, G06F 1/26, H01M 10/42, H01M 10/44

(54) **ELECTRONIC DEVICE**

(30) Priority: 01.03.2023 US 202363449272 P
(71) Applicant: Getac Technology Corporation, New Taipei City (TW)
(72) Inventor: CHEN, Li-Shing, Taipei City 11568 (TW); LEE, Yng-Wei, Taipei City 11568 (TW); YUAN, Chen-Kuo, Taipei City 11568 (TW)
(74) Representative: Viering, Jentschura & Partner mbB Patent- und Rechtsanwälte

(57) **Abstract**

An electronic device (10) includes a system circuit (110), a power connector (120), a path selection circuit (131), a plurality of battery connectors (140; 141, 143), a plurality of series circuits (133; 133A, 133B), and a control circuit (160). The power connector (120) is suitable for receiving power (Ipo). The path selection circuit (131) is coupled to the system circuit (110) and the power connector (120). The battery connectors (140; 141, 143) are respectively suitable for coupling a plurality of batteries (Bat; BatA, BatB). The series circuits (133; 133A, 133B) respectively correspond to the battery connectors (140; 141, 143), and each series circuit (133; 133A; 133B) is connected between the corresponding battery connector (140; 141, 143) and the path selection circuit (131). Each series circuit (133; 133A; 133B) includes: a charging switch (SWc), a battery switch (SWb) and a discharging path (PTd). In a sequential discharge mode, the control circuit (160) controls the series circuits (133; 133A, 133B) to turn on the battery switch (SWb) thereof in turn and controls the path selection circuit (131) to connect the series circuits (133; 133A, 133B) to the system circuit. The remaining battery switches (SWb) and all charging switches (SWc) remain off.

## Description

### BACKGROUND OF THE INVENTION

### Technical Field

The present invention relates to a charging and discharging technology, and in particular, to an electronic device, which has a charging and discharging circuit suitable for a plurality of charge and discharge modes.

### Related Art

Nowadays, many electronic devices use batteries. With the continuous innovation of electronic devices, the use function is increased and the operation efficiency is strengthened. However, it is expectable that the power consumption of electronic devices will also be increased relatively.

In order to supply sufficient electricity, most portable electronic devices will adopt a multi-battery architecture. Under the multi-battery architecture, these batteries are charged and discharged both in different paths. Therefore, the multi-battery architecture uses many elements and the circuit is quite complex.

### SUMMARY OF THE INVENTION

In an embodiment, an electronic device includes a system circuit, a power connector, a path selection circuit, a plurality of battery connectors, a plurality of series circuits, and a control circuit. The power connector is configured to receive power. The path selection circuit is coupled to the system circuit and the power connector. The battery connectors are respectively configured to couple a plurality of batteries. The series circuits respectively correspond to the battery connectors. Each series circuit is connected between the corresponding battery connector and the path selection circuit. Each series circuit includes: a charging switch, a battery switch and a discharging path. The charging switch and the battery switch are connected in series between the path selection circuit and the corresponding battery connector, and the discharging path bridges across the charging switch. The control circuit is coupled to the path selection circuit and each series circuit, and is configured to control a connection state of the path selection circuit and control the charging switch and the battery switch of each series circuit. In a sequential discharge mode, the control circuit controls the path selection circuit to connect the series circuits to the system circuit, and controls the series circuits to turn on the battery switch thereof in turn and to remain the remaining battery switches and all charging switches of the series circuits off.

In some embodiments, in the sequential discharge mode, the control circuit further controls the path selection circuit to connect the power connector to the system circuit.

In some embodiments, in a simultaneous discharge mode, the control circuit further controls the battery switch of each series circuit to be turned on, controls the charging switch of each series circuit to be turned off, and controls the path selection circuit to connect the series circuits to the system circuit.

In some embodiments, the control circuit firstly works in the sequential discharge mode until the electricity of the batteries satisfies a specified electricity, and then works in the simultaneous discharge mode when the electricity of the batteries satisfies the specified electricity.

In some embodiments, in the simultaneous discharge mode, the control circuit further controls the path selection circuit to connect the power connector to the system circuit.

In some embodiments, in a sequential charge mode, the control circuit further controls the series circuits to turn on the charging switch and the battery switch thereof in turn, and controls the path selection circuit to connect the series circuits to the external power.

In some embodiments, in a simultaneous charge mode, the control circuit turns on the charging switch and the battery switch of each series circuit, and controls the path selection circuit to connect the series circuits to the external power.

In some embodiments, the batteries have different electricity. The control circuit further firstly work in the sequential charge mode until the batteries have the same electricity, and then work in the simultaneous charge mode when the batteries have the same electricity. In addition, in a sequential charge mode, the control circuit controls the series circuits to turn on the charging switch and the battery switch thereof in turn, and controls the path selection circuit to connect the series circuits to the external power.

In some embodiments, the electronic device further includes a USB connector. The USB connector is connected to the path selection circuit, and is configured to receive another external power.

In some embodiments, the discharging path is a discharging switch. The discharging switch bridges across the charging switch, and is controlled by the control circuit.

In some embodiments, the discharging switch is a metal-oxide-semiconductor field-effect transistor element, a bipolar junction transistor or a relay.

In some embodiments, the discharging switch is a metal-oxide-semiconductor field-effect transistor diode. Herein, the metal-oxide-semiconductor field-effect transistor diode bridges across the charging switch, and a reverse end of the metal-oxide-semiconductor field-effect transistor diode is adjacent to the path selection circuit.

In some embodiments, the discharging path is a unidirectional control unit. Herein, the unidirectional control unit bridges across the charging switch, and a reverse end of the unidirectional control unit is adjacent to the path selection circuit.

In some embodiments, the unidirectional control unit is a diode.

In some embodiments, the control circuit includes a controller. The controller is coupled to the path selection circuit and electrically connected to each series circuit. In addition, the controller is configured to control a connection state of the path selection circuit and control the charging switch and the battery switch of each series circuit.

In some embodiments, the path selection circuit includes a charger. The power connector is coupled to the system circuit via the charger, and the system circuit is coupled to each series circuit via the charger.

In some embodiments, the path selection circuit includes a charger, two transistor switches and a unidirectional control unit. The charger is coupled to control ends of the two transistor switches. First ends of the two transistor switches are coupled to a first end of each series circuit and coupled to the system circuit via the unidirectional control unit. A second end of one of the two transistor switches is coupled to a contact between the power connector and the system circuit, and A second end of the other is coupled to a ground.

To sum up, the electronic device according to any one embodiment may achieve charging and discharging functions by most common paths, and may be applied to a plurality of charge and discharge modes simultaneously, so as to select one charge and discharge mode according to use demands or switch to a suitable charge and discharge mode according to the change of a use environment. In addition, the electronic device may simplify the circuit architecture of a multi-battery charging and discharging circuit.

### BRIEF DESCRIPTION OF DRAWINGS

FIG. 1 is a functional block diagram of an electronic device according to some embodiments.
FIG. 2 is an equivalent circuit diagram of some embodiments of a series circuit of FIG. 1.
FIG. 3 is an equivalent circuit diagram of some other embodiments of a series circuit of FIG. 1.
FIG. 4 is a schematic circuit diagram of some embodiments of a switch combination of FIG. 1.
FIG. 5 is a schematic circuit diagram of an implementation pattern of the electronic device of FIG. 1.
FIG. 6 is a schematic circuit diagram of another implementation pattern of the electronic device of FIG. 1.
FIG. 7 is a schematic circuit diagram of yet another implementation pattern of the electronic device of FIG. 1.
FIG. 8 is a signal timing diagram of an example of the electronic device of FIG. 7.

### DETAILED DESCRIPTION OF THE INVENTION

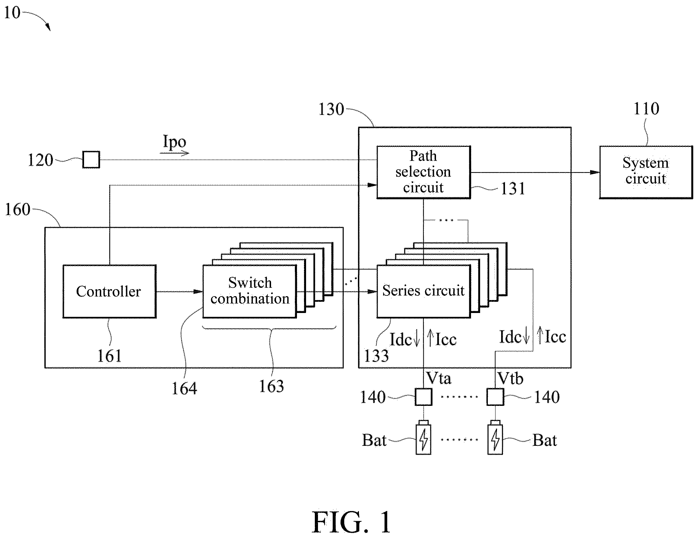

Referring to FIG. 1, an electronic device 10 includes a system circuit 110, a power connector 120, a charging and discharging circuit 130, a plurality of battery connectors 140, and a control circuit 160. The charging and discharging circuit 130 is coupled to the system circuit 110, the power connector 120 and the battery connectors 140.

The power connector 120 is suitable for receiving power Ipo (also referred to as external power Ipo) from an external power supply AC. Each battery connector 140 is suitable for coupling a battery Bat. Each battery Bat stores electricity. The charging and discharging circuit 130 may charge the battery Bat coupled thereto with the power Ipo via each battery connector 140 (that is, increase the stored electricity of the battery Bat) and may receive power Idc supplied based on the stored electricity by the battery Bat coupled thereto via each battery connector 140.

The control circuit 160 may control a connection path of the charging and discharging circuit 130, whereby the charging and discharging circuit 130 may supply power to the system circuit 110 with the power Ipo from the power connector 120 and/or the power Idc from the battery connector 140, and may charge the low-electricity battery Bat with the received power Ipo via the corresponding battery connector 140. The power Ipo for charging may be composed of the power Ipo from the power connector 120, the power Idc from the battery connector 140 coupled to the high-electricity battery Bat, or the power Ipo from the power connector 120 and the power Idc from the battery connector 140 coupled to the high-electricity battery Bat.

The charging and discharging circuit 130 includes a path selection circuit 131 and a plurality of series circuits 133. The series circuits 133 correspond to the battery connectors 140 one to one. Each series circuit 133 is coupled between the corresponding battery connector 140 and the path selection circuit 131. The path selection circuit 131 may selectively provide a connection path between the power connector 120 and the system circuit 110, a connection path between the system circuit 110 and each series circuit 133, and a connection path between the power connector 120 and each series circuit 133.

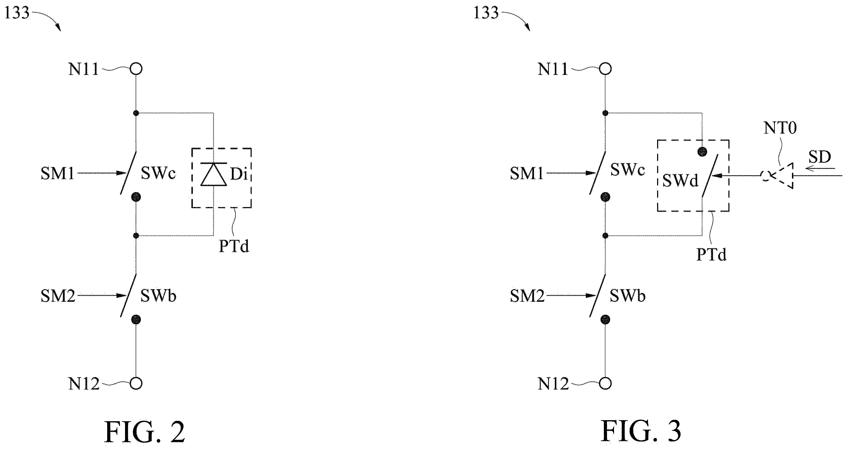

Referring to FIG. 2 and FIG. 3, each series circuit 133 includes a battery switch SWb, a charging switch SWc and a discharging path PTd. The charging switch SWc and the battery switch SWb are connected in series between two ends (hereinafter referred to as a first end N11 and a second end N12 respectively) of the series circuit 133. The first end N11 of the series circuit 133 is externally coupled to the path selection circuit 131, and the second end N12 of the series circuit 133 is externally coupled to the corresponding battery connector 140. In other words, the charging switch SWc and the battery switch SWb are sequentially connected in series between the path selection circuit 131 and the corresponding battery connector 140. The discharging path PTd bridges across the charging switch SWc.

Referring to FIG. 1 to FIG. 3, the control circuit 160 is coupled to the path selection circuit 131 and each series circuit 133, and is suitable for controlling a connection path of the path selection circuit 131 and controlling on-off (that is, on and off) of the charging switch SWc and the battery switch SWb of each series circuit 133.

In some embodiments, the discharging path PTd allows only passage of the power Idc emitted by the corresponding battery Bat.

In some embodiments, the discharging path PTd may be a unidirectional control unit Di or a discharging switch SWd. The "on" of the discharging path PTd may mean that the discharging switch SWd electrically connects two ends thereof in response to an on-off signal SD so as to allow the passage of the power Idc, or the unidirectional control unit Di electrically connects two ends thereof in response to a forward bias voltage so as to allow the passage of the power Idc. Conversely, the "off" of the discharging path PTd may mean that the discharging switch SWd electrically disconnects two ends thereof in response to the on-off signal SD so as not to allow the passage of the power Idc, or the unidirectional control unit Di electrically disconnects two ends thereof in response to a forward bias voltage so as not to allow the passage of the power Idc.

In some embodiments, referring to FIG. 1 and FIG. 2, when the discharging path PTd is the unidirectional control unit Di, the unidirectional control unit Di bridges across the charging switch SWc in a direction in which a reverse end is adjacent to the path selection circuit 131. That is, with respect to the forward end, the reverse end of the unidirectional control unit Di is adjacent to the path selection circuit 131.

In some examples, the unidirectional control unit Di may be a diode, as shown in FIG. 2. Herein, a forward end of the diode is coupled to a first end of the charging switch SWc (that is, an end coupled to the battery switch SWb), and a reverse end of the diode is coupled to a second end of the charging switch SWc (that is, an end coupled to the path selection circuit 131).

In some other embodiments, referring to FIG. 1 and FIG. 3, when the discharging path PTd is the discharging switch SWd, the discharging switch SWd bridges across the charging switch SWc, and the discharging switch SWd is controlled by the control circuit 160.

In any charge mode (for example, a sequential charge mode or a simultaneous charge mode), the control circuit 160 controls the discharging switch SWd to remain off.

In any discharge mode (for example, a sequential discharge mode or a simultaneous discharge mode), the control circuit 160 controls the discharging switch SWd to remain on.

In some examples, the discharging switch SWd may be a metal-oxide-semiconductor field-effect transistor (MOSFET) element, a bipolar junction transistor (BJT) or a relay, etc. In addition, the discharging switch SWd is controlled by the control circuit 160.

Herein, two ends of the MOSFET element are respectively coupled to the two ends of the charging switch SWc, and a control end of the MOSFET element is coupled to the control circuit 160. When the corresponding battery Bat is to be subjected to a charge/discharge operation (that is, discharged or charged), the control end of the MOSFET element receives the on-off signal SD from the control circuit 160, whereby the MOSFET element connects or disconnects the two ends of the MOSFET element according to the on-off signal SD, thereby providing a discharging bypass bypassing the charging switch SWc when the battery Bat is discharged, and disconnecting the discharging bypass when the battery Bat is not discharged.

In some embodiments, a discharging control pin of a controller 161 may be coupled directly or via an inverter NT0 to the control end of the discharging switch SWd. The controller 161 outputs the on-off signal SD having a corresponding level in response to an operation to be performed by the charging and discharging circuit 130 (for example, discharging the battery Bat or charging the battery Bat, etc.), so as to control the operation of the discharging switch SWd.

In some embodiments, the discharging switch SWd may be designed to be normally turned on. When it is necessary to limit the discharge of the battery Bat, the controller 161 switches the level of the on-off signal SD again and provides the signal (or via the inverter NT0) to the discharging switch SWd to turn off the discharging switch SWd (that is, the discharging switch SWd disconnects the two ends thereof in response to the discharging switch SWd).

In some other embodiments, the discharging switch SWd may also be designed to be normally turned off. When the battery Bat is to be discharged, the controller 161 switches the level of the on-off signal SD again and provides the signal (or via the inverter NT0) to the discharging switch SWd to turn on the discharging switch SWd (that is, the discharging switch SWd connects the two ends thereof in response to the discharging switch SWd).

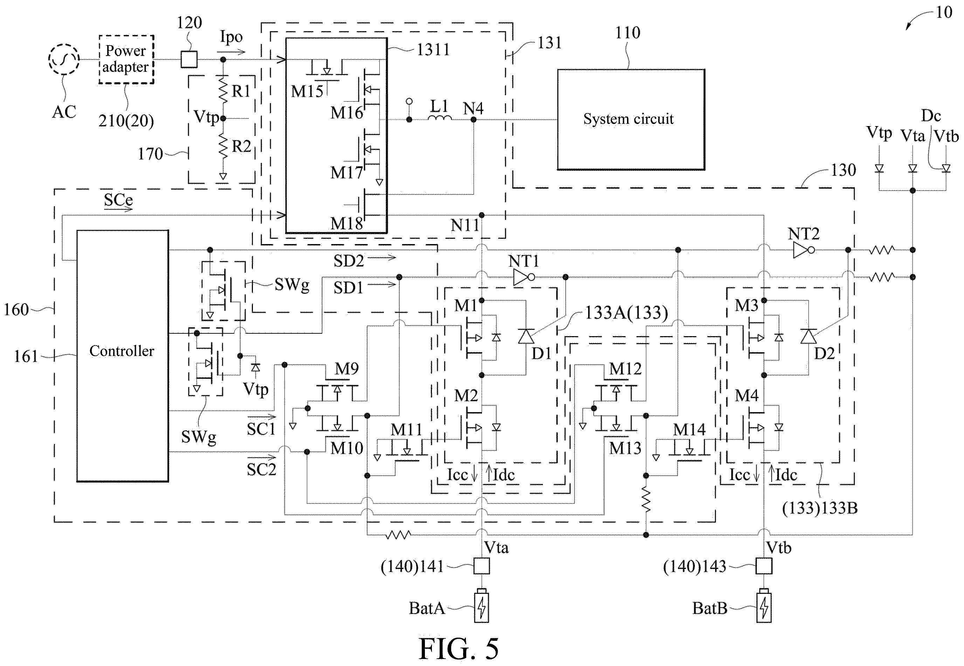

In some embodiments, the MOSFET element may be configured as a MOSFET diode D1 (or D2) in a diode connected manner, as shown in FIG. 5 to FIG. 7. Referring to FIG. 5 to FIG. 7, a forward end of the MOSFET diode D1/D2 is coupled to the first end of the charging switch SWc (that is, the end coupled to the battery switch SWb), and a reverse end of the MOSFET diode D1/D2 is coupled to the second end of the charging switch SWc (that is, the end coupled to the path selection circuit 131). In other words, the MOSFET diode D1/D2 bridges across the charging switch SWc in a direction in which the reverse end is adjacent to the path selection circuit 131. That is, with respect to the forward end, the reverse end of the MOSFET diode D1/D2 is adjacent to the path selection circuit 131. A control end of the MOSFET diode D1/D2 is coupled to the control circuit 160.

In some examples, each of the foregoing MOSFET elements may be an N-type metal-oxide-semiconductor field-effect transistor (NMOSFET) or a P-type metal-oxide-semiconductor field-effect transistor (PMOSFET).

In some embodiments, referring to FIG. 5 to FIG. 7, in addition to coupling the controller 161, the control end of each MOSFET diode D1/D2 (that is, the discharging switch SWd) is coupled to a ground via a ground switch SWg, and the ground switch SWg is controlled by a sense voltage Vtp of the external power Ipo, as shown in FIG. 5 to FIG. 7.

In some embodiments, one end of the ground switch SWg may be coupled directly or via an inverter NT1/NT2 to the control end of the discharging switch SWd, and the other end of the ground switch SWg is coupled to the ground.

For example, referring to FIG. 3, FIG. 5, FIG. 6, and FIG. 7, in a case that the discharging switch SWd is the MOSFET diode D1/D2 implemented by an NMOSFET and is normally turned on, the controller 161 normally outputs low-level on-off signals SD1, SD2, which are inverted to high-level signals via the inverter NT1/NT2 and inputted to the MOSFET diode D1/D2, whereby the MOSFET diode D1/D2 is normally turned on. In a sequential discharge mode, a battery BatA is discharged first, while other batteries BatB are not discharged. At this moment, the on-off signal SD2 outputted by the controller 161 is switched from a low level to a high level, whereby the MOSFET diode D2 is turned off, and the MOSFET diode D1 remains on because the on-off signal SD1 outputted by the controller 161 is maintained at the low level, and the battery BatA is electrically connected to the path selection circuit 131 through a MOSFET element M2 and the MOSFET diode D1. After the discharge of the battery BatA is completed, the battery BatB starts to be discharged, while the battery BatA is not discharged. At this moment, the on-off signal SD1 outputted by the controller 161 is switched from the low level to the high level, and the on-off signal SD2 outputted by the controller 161 is switched from the high level to the low level, whereby the on-off signal SD1 outputted by the controller 161 is switched from the low level to the high level, the MOSFET diode D1 is turned off and the MOSFET diode D2 is turned on, and the battery BatB is electrically connected to the path selection circuit 131 through a MOSFET element M4 and the MOSFET diode D2.

It is to be understood that if the discharging switch SWd is a PMOSFET, the relationship between the on-off of the PMOSFET and the level of the on-off signal SD is opposite to that of the NMOSFET under the same circuit architecture and operation mode.

In some embodiments, the charging and discharging circuit 130 may be adapted to a plurality of charge and discharge control modes. The charge and discharge modes may be, for example, a sequential discharge mode, a simultaneous discharge mode, a sequential charge mode, a simultaneous charge mode, etc. Herein, the control circuit 160 may provide path control of the one or more charge and discharge modes, so as to control the connection path of the charging and discharging circuit 130 in response to the current charge and discharge mode. In other words, the charging and discharging circuit 130 may have one or more charge and discharge control modes in response to the number of path controls of the charge and discharge modes which may be provided by the control circuit 160. For example, the charging and discharging circuit 130 may have one charge and discharge control mode if the control circuit 160 may provide the path control of any one of the foregoing charge and discharge modes. The charging and discharging circuit 130 may have two charge and discharge control modes if the control circuit 160 may provide the path controls of any two of the foregoing charge and discharge modes.

In a sequential discharge mode, the control circuit 160 controls the battery switch SWb of one of the series circuits 133 to be turned on, controls the battery switches SWb of the other series circuits 133 (that is, the remaining series circuits 133) and the charging switches SWc of all the series circuits 133 to be turned off, and controls the path selection circuit 131 to connect the series circuits 133 to the system circuit 110. In other words, the control circuit 160 controls the series circuits 133 to turn on the battery switches SWb thereof in turn, and the remaining battery switches SWb except the battery switch SWb which is currently turned on and all the charging switches SWc remain off.

Specifically, in the sequential discharge mode, the path selection circuit 131 remains the series circuits 133 and the system circuit 110 on, and the series circuits 133 turn on the battery switches SWb thereof one by one, whereby electrical routes directly connecting the battery connector 140 to the system circuit 110 are formed by the turned-on battery switches SWb and the discharging path PTd. Therefore, the batteries Bat may discharge the power Idc to the system circuit 110 via the corresponding battery connectors 140 and electrical routes when the electrical routes are formed in the corresponding series circuits 133 one by one.

In some embodiments, the discharge order of the batteries Bat may be in accordance with battery sequencing, electricity size, preset priority, etc. in the sequential discharge mode.

For example, referring to FIG. 5, in a case that the two batteries BatA and BatB are discharged in the order of battery sequencing, the charging switch SWc and the battery switch SWb are MOSFET elements M1, M2/M3, M4 in each series circuit 133A/133B. Herein, the battery BatA is coupled to the battery connector 141, and the series circuit 133A is coupled between the battery connector 141 and the path selection circuit 131. The battery BatB is coupled to the battery connector 143, and the series circuit 133B is coupled between the battery connector 143 and the path selection circuit 131.

In the sequential discharge mode, the battery BatA will be discharged first, and during the discharge of the battery BatA, the battery BatB will not be actuated (that is, not discharged or charged). After the discharge of the battery BatA is completed, the charging and discharging circuit 130 switches to discharge the battery BatB while the battery BatA is not actuated.

In other words, the discharge procedure begins with a stage where the battery BatA is discharged and the battery BatB is not actuated. In the stage where the battery BatA is discharged and the battery BatB is not actuated, under the control of the control circuit 160, the MOSFET element M2 (that is, the battery switch SWb of the series circuit 133A corresponding to the battery BatA) is in an on state, and the MOSFET element M1 (that is, the charging switch SWc of the series circuit 133A corresponding to the battery BatA) and the MOSFET elements M3, M4 (that is, the battery switch SWb and the charging switch SWc of the series circuit 133B corresponding to the battery BatB) are in an off state. At this moment, in the series circuit 133A, the turned-on MOSFET element M2 and the discharging path PTd form an electrical route connected between the corresponding battery connector 141 and the path selection circuit 131 (that is, connecting the two ends of the series circuit 133A), and the path selection circuit 131 further connects the first end N11 of the series circuit 133A to the system circuit 110 (that is, connecting the third end and the second end of the path selection circuit 131), whereby the battery BatA releases the power Idc according to the electricity thereof, and the power Idc is sequentially supplied to the system circuit 110 via the corresponding battery connector 141, the electrical route connecting the two ends of the series circuit 133A, and the path selection circuit 131.

After the discharge of the battery BatA is completed, the discharge procedure is switched from the stage where the battery BatA is discharged and the battery BatB is not actuated into a stage where the battery BatB is discharged and the battery BatA is not actuated. In the stage where the battery BatB is discharged and the battery BatA is not actuated, under the control of the control circuit 160, the MOSFET element M4 corresponding to the battery BatB is in an on state, and the MOSFET element M3 corresponding to the battery BatB and the MOSFET elements M1, M2 corresponding to the battery BatA are in an off state. At this moment, in the series circuit 133B, the MOSFET element M4 and the discharging path PTd form an electrical route connected between the corresponding battery connector 143 and the path selection circuit 131 (that is, connecting the two ends of the series circuit 133B), and the path selection circuit 131 further connects the first end N11 of the series circuit 133B to the system circuit 110 (that is, connecting the third end and the second end of the path selection circuit 131), whereby the battery BatB releases the power Idc according to the electricity thereof, and the power Idc is sequentially supplied to the system circuit 110 via the corresponding battery connector 141, the electrical route connecting the two ends of the series circuit 133B, and the path selection circuit 131.

In the simultaneous discharge mode, the control circuit 160 controls the battery switches SWb of all the series circuits 133 to be turned on, controls the charging switches SWc of all the series circuits 133 to be turned off, and controls the path selection circuit 131 to connect the series circuits 133 to the system circuit 110. In other words, the control circuit 160 controls the path selection circuit 131 to connect the discharging path to the system circuit 110.

Specifically, in the simultaneous discharge mode, the path selection circuit 131 remains the series circuits 133 and the system circuit 110 on, and the battery switches SWb of all the series circuits 133 will be turned on together, whereby electrical routes directly connecting the battery connector 140 to the system circuit 110 are formed. Therefore, all the batteries Bat may discharge the power Idc to the system circuit 110 together via the corresponding battery connectors 140 and electrical routes when the corresponding electrical routes are formed.

In some embodiments, the control circuit 160 may directly control the charging and discharging circuit 130 to enter the simultaneous discharge mode to discharge all the batteries Bat together, regardless of whether the stored electricity of the batteries Bat is the same or not.

In some other embodiments, before working in simultaneous discharge mode, the control circuit 160 may firstly work in the sequential discharge mode until all the batteries Bat satisfy a specified electricity. Then the control circuit 160 work in r the simultaneous discharge mode when all the batteries Bat satisfy the specified electricity. In other words, the control circuit 160 may first control the charging and discharging circuit 130 to enter the sequential discharge mode whereby all the batteries Bat satisfy the specified electricity, and may then control the charging and discharging circuit 130 to enter the simultaneous discharge mode whereby all the batteries Bat are discharged together. In this way, delayed discharge caused by an internal protection mechanism of any battery Bat can be avoided. The specified electricity may be the lowest electricity in the electricity stored by all the batteries Bat, or the preset and stored electricity. "Satisfy" means that the peak electricity or average electricity of the battery Bat within a given time is the same as the specified electricity, or the difference from the specified electricity is 0 or less than a given value that is not 0. In some embodiments, the specified electricity may be the electricity when the charging switch in the battery Bat is released. The charging switch in the battery Bat may generally be a complementary field effect transistor (CFET). In an example, the specified electricity is generally less than 95%.

In some embodiments, when the stored electricity (that is, remaining electricity) of the batteries Bat is inconsistent, the control circuit 160 may first control the charging and discharging circuit 130 to enter the sequential discharge mode, whereby the high-electricity batteries Bat (that is, the electricity thereof is higher than that of the batteries Bat with the lowest electricity) are sequentially discharged until the electricity is substantially the same as that of the batteries Bat with the lowest electricity. When the electricity of all the batteries Bat is substantially the same, the control circuit 160 controls the charging and discharging circuit 130 to enter the simultaneous discharge mode to discharge all the batteries Bat to the system circuit 110.

In the sequential charge mode, the control circuit 160 controls the charging switch SWc and the battery switch SWb of one of the series circuits 133 to be turned on, controls the charging switches SWc and the battery switches SWb of the other series circuits 133 (that is, the remaining series circuits 133) to be turned off, and controls the path selection circuit 131 to connect the series circuits 133 to the external power Ipo. For example, when the power Ipo comes from the power connector 120, the path selection circuit 131 connects the series circuit 133 to the power connector 120.

Specifically, in the sequential charge mode, the path selection circuit 131 remains the series circuits 133 and the external power Ipo on, and the series circuits 133 turn on the charging switches SWc and the battery switches SWb thereof one by one, whereby electrical routes directly connecting the battery connector 140 to the external power Ipo are formed by the turned-on battery switches SWb and the turned-on charging switches SWc. Therefore, the external power Ipo charges the batteries Bat one by one.

In some embodiments, the charge order of the batteries Bat may be in accordance with battery sequencing, electricity size, preset priority, etc. in the sequential charge mode.

For example, referring to FIG. 3 and FIG. 5, in the foregoing case that the two batteries BatA and BatB are charged in the order of battery sequencing, the charging switch SWc and the battery switch SWb are MOSFET elements M1, M2/M3, M4 in each series circuit 133A/133B. In the sequential charge mode, the battery BatA will be discharged first (that is, the corresponding charging switch SWc and battery switch SWb are turned on), and during the charge of the battery BatA, the battery BatB will not be actuated (that is, not discharged or charged, in other words, the corresponding charging switch SWc and battery switch SWb are turned off). After the charge of the battery BatA is completed, the charging and discharging circuit 130 switches to charge the battery BatB while the battery BatA is not actuated. The following describes an example in which the external power Ipo comes from the power connector 120.

In other words, the charge procedure begins with a stage where the battery BatA is charged and the battery BatB is not actuated. In the stage where the battery BatA is charged and the battery BatB is not actuated, under the control of the control circuit 160, the MOSFET elements M1, M2 (that is, the battery switch SWb and the charging switch SWc of the series circuit 133A corresponding to the battery BatA) are in an on state, and the MOSFET elements M3, M4 (that is, the battery switch SWb and the charging switch SWc of the series circuit 133B corresponding to the battery BatB) are in an off state. At this moment, in the series circuit 133A, the turned-on MOSFET elements M1, M2 form an electrical route connected between the corresponding battery connector 141 and the path selection circuit 131 (that is, connecting the two ends of the series circuit 133A), and the path selection circuit 131 further connects the third end (that is, coupling the first end N11 of the series circuit 133A) of the path selection circuit 131 to the first end (that is, coupling one end of the power connector 120), whereby the external power Ipo is sequentially supplied to the battery BatA via the power connector 120, the path selection circuit 131, the electrical route connecting the two ends of the series circuit 133A, and the corresponding battery connector 141, and then stored in the battery BatA (that is, charged).

After the charge of the battery BatA is completed, the charge procedure is switched from the stage where the battery BatA is charged and the battery BatB is not actuated into a stage where the battery BatB is charged and the battery BatA is not actuated. In the stage where the battery BatB is charged and the battery BatA is not actuated, under the control of the control circuit 160, the MOSFET elements M3, M4 are in an on state, and the MOSFET elements M1, M2 are in an off state. At this moment, in the series circuit 133B, the turned-on MOSFET elements M3, M4 form an electrical route connected between the corresponding battery connector 143 and the path selection circuit 131 (that is, connecting the two ends of the series circuit 133B), and the path selection circuit 131 further connects the third end of the path selection circuit 131 to the first end, whereby the external power Ipo is sequentially supplied to the battery BatA via the power connector 120, the path selection circuit 131, the electrical route connecting the two ends of the series circuit 133B, and the corresponding battery connector 141, and then stored in the battery BatA (that is, charged).

In the simultaneous charge mode, the control circuit 160 controls the battery switches SWb and the charging switches SWc of all the series circuits 133 to be turned on, and controls the path selection circuit 131 to connect the series circuits 133 to the external power Ipo. For example, when the external power Ipo comes from the power connector 120, the path selection circuit 131 connects the series circuit 133 to the power connector 120.

Specifically, in the simultaneous charge mode, the path selection circuit 131 remains the series circuits 133 and the external power Ipo on, and the battery switches SWb and the charging switches SWc of all the series circuits 133 are turned on together, whereby electrical routes directly connecting the battery connector 140 to the external power Ipo are formed. Therefore, the external power Ipo may charge all the batteries Bat via the electrical routes and the battery connector 140.

In some embodiments, the control circuit 160 may directly control the charging and discharging circuit 130 to enter the simultaneous charge mode to charge all the batteries Bat together, regardless of whether the stored electricity of the batteries Bat is the same or not.

In some other embodiments, before working in the simultaneous charge mode, the control circuit 160 firstly works in the sequential charge mode until the stored electricity of all the batteries Bat is substantially the same. Then, the control circuit 160 works in the simultaneous charge mode when the stored electricity of all the batteries Bat is substantially the same. In other words, the control circuit 160 may first control the charging and discharging circuit 130 to enter the sequential charge mode whereby all the batteries Bat achieve the stored electricity which is substantially the same, and may then control the charging and discharging circuit 130 to enter the simultaneous charge mode whereby all the batteries Bat are charged together.

In some embodiments, when the stored electricity (that is, remaining electricity) of the batteries Bat is inconsistent, the control circuit 160 may first control the charging and discharging circuit 130 to enter the sequential charge mode, whereby the low-electricity batteries Bat (that is, the electricity thereof is lower than that of the batteries Bat with the highest electricity) are sequentially charged until the electricity is substantially the same as that of the batteries Bat with the highest electricity. When the electricity of all the batteries Bat is substantially the same, the control circuit 160 controls the charging and discharging circuit 130 to enter the simultaneous charge mode to charge all the batteries Bat together. In some implementation patterns, in a charge mode of sequential charge prior to simultaneous charge, the control circuit 160 may first control the charging and discharging circuit 130 to sequentially charge the low-electricity battery Bat with the external power Ipo or the power Idc of the battery Bat with the highest electricity, and may then control the charging and discharging circuit 130 to simultaneously charge all the batteries Bat with the external power Ipo after the electricity is substantially the same. If the external power Ipo is used for charging, the control circuit 160 controls the path selection circuit 131 to connect the series circuit 133 to the external power Ipo. If the external power Ipo is used for charging, the control circuit 160 controls the path selection circuit 131 to remain the series circuit 133 disconnected from other circuits (that is, disconnecting the external power Ipo from the system circuit 110).

In some embodiments, referring to FIG. 1, the control circuit 160 includes a controller 161, and the controller 161 is coupled to the path selection circuit 131. Herein, the controller 161 is suitable for controlling a connection state of the path selection circuit 131 and controlling a connection state of each series circuit 133.

In some embodiments, the control circuit 160 may further include a signal conversion circuit 163, and the signal conversion circuit 163 is coupled between the controller 161 and the series circuit 133. The signal conversion circuit 163 is coupled to the control end of the charging switch SWc and the control end of the battery switch SWb of each series circuit 133. Herein, the control circuit 160 generates control signals for controlling each series circuit 133 to perform corresponding on-off operations according to the used charge and discharge modes. Then the signal conversion circuit 163 converts the control signals SC1, SC2 into corresponding on-off signals SM1, SM2 and outputs the on-off signals to the control end of the charging switch SWc and the control end of the battery switch SWb of each series circuit 133, whereby the control end of the charging switch SWc and the control end of the battery switch SWb of each series circuit 133 are turned on or remain off in response to the received on-off signals SM1, SM2.

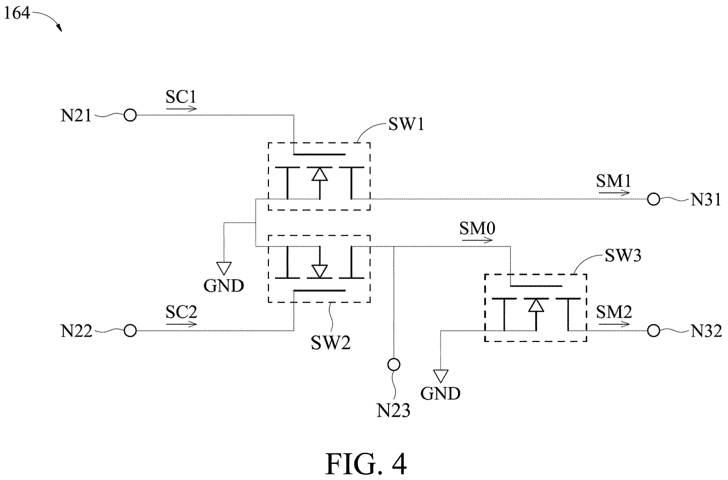

In some embodiments, referring to FIG. 1 and FIG. 4, the signal conversion circuit 163 includes a plurality of switch combinations 164, and the switch combinations 164 correspond to the series circuits 133 one to one.

Each switch combination 164 is composed of a plurality of control switches SW1 to SW3. A first end of the control switch SW1 is coupled to a ground GND, and a second end of the control switch SW1 is coupled to an output end N31. A control end of the control switch SW1 is coupled to an input end N21. A first end of the control switch SW2 is coupled to the ground GND, and a second end of the control switch SW2 is coupled to a control end of the control switch SW3. A control end of the control switch SW2 is coupled to another input end N22. A first end of the control switch SW3 is coupled to the ground GND, and a second end of the control switch SW3 is coupled to another output end N32. Herein, the output end N31 is coupled to the control end of the charging switch SWc of the corresponding series circuit 133, and the output end N32 is coupled to the control end of the battery switch SWb of the corresponding series circuit 133. The two input ends N21, N22 are separately coupled to the controller 161, and respectively receive the two control signals SC1, SC2 from the controller 161.

Referring to FIG. 1 to FIG. 4, when the control signals SC1, SC2 are received, the control switch SW1 generates an on-off signal SM1 in response to the control signal SC1, and the control switch SW2 generates an on-off signal SM0 in response to the control signal SC2. The control switch SW3 generates an on-off signal SM2 in response to the on-off signal SM0. The output end N31 outputs the on-off signal SM1 to the control end of the charging switch SWc of the corresponding series circuit 133, whereby the charging switch SWc is turned on and off in response to the on-off signal SM1. The output end N32 outputs the on-off signal SM2 to the control end of the battery switch SWb of the corresponding series circuit 133, whereby the battery switch SWb is turned on and off in response to the on-off signal SM2.

In some embodiments, the control switches SW1 to SW3 may be MOSFET elements M9 to M11 (or M12 to M14), as shown in FIG. 5 to FIG. 7. In some examples, each MOSFET element M9/M10/M11/M12/M13/M14 may be an N-type metal-oxide-semiconductor field-effect transistor (NMOSFET) or a P-type metal-oxide-semiconductor field-effect transistor (PMOSFET).

In some embodiments, referring to FIG. 4 to FIG. 7, the control switch SW3, in addition to receiving the on-off signal SM0 from the control switch SW2, is coupled to the input end N23 and coupled to forward ends of a plurality of unidirectional control units Dc via the input end N23. Reverse ends of the unidirectional control units Dc receive a detection voltage Vtp and battery voltages Vta, Vtb of the external power Ipo one to one, as shown in FIG. 5 to FIG. 7. At this moment, the control switch SW3 generates the on-off signal SM1 according to the on-off signal SM0, the detection voltage Vtp and the battery voltages Vta, Vtb.

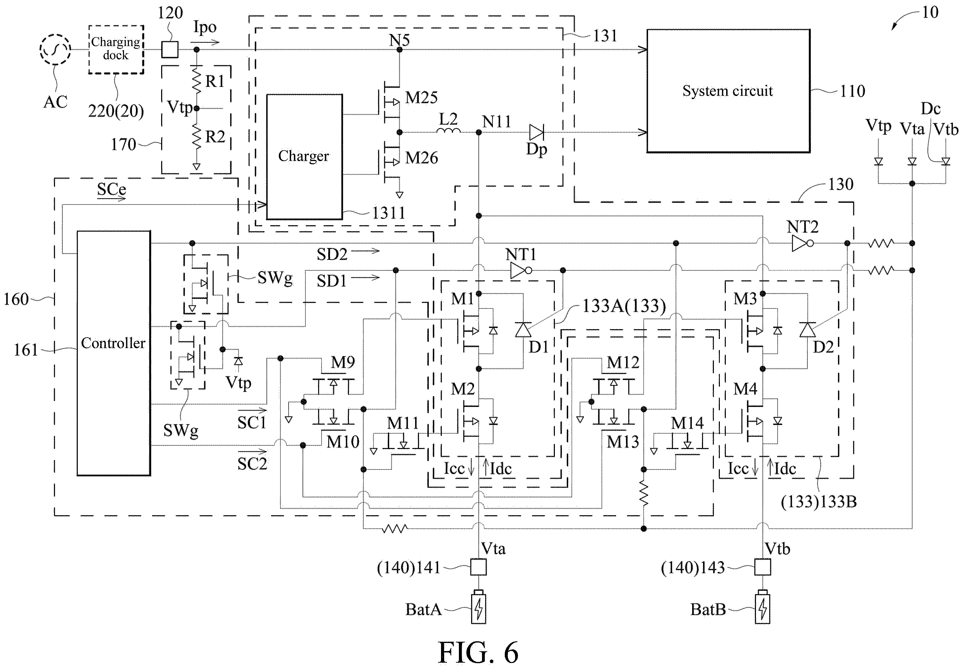

In some embodiments, the electronic device 10 may further include a power detection circuit 170, and the power detection circuit 170 is suitable for detecting the received external power Ipo and generating the detection voltage Vtp accordingly, as shown in FIG. 5 and FIG. 6.

In some examples, the unidirectional control unit Dc may be a diode, as shown in FIG. 5 to FIG. 7. Herein, a forward end of the diode is coupled to one of the detection voltage Vtp and the battery voltages Vta, Vtb. A reverse end of the diode is coupled to the input end N21.

For example, referring to FIG. 5 and FIG. 6, in the foregoing case of the two batteries BatA, BatB, a forward end of a diode (hereinafter referred to as a first diode) is coupled to an output end of the power detection circuit 170, and a reverse end of the first diode is coupled to the input end N21. Therefore, the input end N21 receives the detection voltage Vtp outputted from the power detection circuit 170 via the first diode. A forward end of another diode (hereinafter referred to as a second diode) is coupled to the battery connector 141, and a reverse end of the second diode is coupled to the input end N21. Therefore, the input end N21 receives, via the second diode, the battery voltage Vta obtained by the battery connector 141. A forward end of yet another diode (hereinafter referred to as a third diode) is coupled to the battery connector 143, and a reverse end of the third diode is coupled to the input end N21. Therefore, the input end N21 receives, via the third diode, the battery voltage Vtb obtained by the battery connector 143.

In some embodiments, the power detection circuit 170 may be a voltage dividing resistor circuit. Specifically, in the voltage dividing resistor circuit, two voltage dividing resistors R1, R2 are sequentially connected in series between the power connector 120 and the ground, and the detection voltage Vtp is outputted from a contact between the two voltage dividing resistors R1, R2 (that is, the output end of the power detection circuit 170).

In some embodiments, referring to FIG. 5 and FIG. 6, the path selection circuit 131 includes a charger 1311. The charger 1311 is coupled to the controller 161. The charger 1311 receives a control signal SCe from the controller 161 and provides a connection path between the system circuit 110, the power connector 120 and each series circuit 133 according to the control signal SCe. In some embodiments, the charger 1311 may be further suitable for reducing the voltage of the power Ipo from the power connector 120, as shown in FIG. 5.

In some implementation patterns, referring to FIG. 5, a first end of the charger 1311 is coupled to the power connector 120. A second end of the charger 1311 is coupled to the system circuit 110 via an inductor L1. In other words, a first end of the inductor L1 is coupled to a second end of the charger 1311, and a second end of the inductor L1 is coupled to the system circuit 110. A third end of the charger 1311 is coupled to the first end N11 of each series circuit 133. In other words, each series circuit 133 is coupled between the third end of the charger 1311 and the corresponding battery connector 140. In some examples, the foregoing power detection circuit 170 is coupled to a wire connected between the power connector 120 and the first end of the charger 1311.

Herein, the charger 1311 includes a buck circuit and a plurality of transistor switches M15, M18. The buck circuit includes transistor switches M16, M17. The transistor switches M15, M16 are sequentially connected in series between the first end and the second end, and the transistor switch M17 is coupled between the second end and the ground. The transistor switch M18 is coupled between the third end and the fourth end. The transistor switch M18 is coupled to a contact N4 between the second end of the inductor L1 and the system circuit 110.

In any charge mode (for example, the sequential charge mode or the simultaneous charge mode), the control signal SCe from the controller 161 enables the charger 1311. Then the charger 1311 turns on the transistor switches M15, M18 and drives the transistor switches M16, M17 to operate. Specifically, the charger 1311 controls the on-off of the transistor switches M16, M17 in a pulse width modulation (PWM) or pulse frequency modulation (PFM) manner, thereby adjusting the voltage outputted by the transistor switches M16, M17.

In any discharge mode (for example, the sequential discharge mode or the simultaneous discharge mode), the control signal SCe from the controller 161 enables the charger 1311. Then the charger 1311 turns on the transistor switch M18 but remains the transistor switches M15 to M17 off.

In some other implementation patterns, referring to FIG. 6, the path selection circuit 131 may further include a buck circuit. The buck circuit includes transistor switches M25, M26. The power connector 120 is coupled to the system circuit 110. A first end of the transistor switch M25 is coupled to a first end of the transistor switch M26. A second end of the transistor switch M25 is coupled to a contact N5 between the power connector 120 and the system circuit 110. A second end of the transistor switch M26 is coupled to the ground. Control ends of the transistor switches M25, M26 are coupled to the charger 1311.

The first end of the transistor switch M25 and the first end of the transistor switch M26 are also coupled to the first end N11 of each series circuit 133 via an inductor L2. In addition, the first end N11 of each series circuit 133 is also coupled to the system circuit 110 via a unidirectional control unit Dp. A forward end of the unidirectional control unit Dp is coupled to the first end N11 of each series circuit 133, and a reverse end of the unidirectional control unit Dp is coupled to the system circuit 110. In some examples, the unidirectional control unit Dp may be a diode, as shown in FIG. 6.

Herein, the controller 161 generates a control signal SCe to enable the charger 1311. After being enabled, the charger 1311 drives the transistor switches M25, M26 to operate based on the charge and discharge modes used. For example, the on-off of the transistor switches M25, M26 is controlled in the PWM or PFM manner, thereby adjusting the voltage outputted by the transistor switches M25, M26.

In any charge mode (for example, the sequential charge mode or the simultaneous charge mode), the charger 1311 is enabled by the control signal SCe to control the transistor switches M25, M26 to operate, whereby the external power Ipo is supplied to the series circuit 133 via the transistor switches M25, M26.

In some embodiments, the charge and discharge modes may also be, for example, a hybrid-power sequential discharge mode. In contrast, the foregoing sequential discharge mode may also be referred to as a single-power sequential discharge mode.

In the hybrid-power sequential discharge mode, under the control of the controller 161, the charger 1311 is enabled by the control signal SCe to control the transistor switches M25, M26 to remain operating. The series circuits 133 turn on the battery switches SWb thereof in turn, and the remaining battery switches SWb except the battery switch SWb which is currently turned on and all the charging switches SWc remain off. Therefore, the external power Ipo is supplied to the system circuit 110 at the same time as the power Idc supplied by the battery Bat (that is, the series circuit 133 is connected in response to the battery switch SWb thereof).

In some embodiments, the charge and discharge modes may also be, for example, a hybrid-power simultaneous discharge mode. In contrast, the foregoing simultaneous discharge mode may also be referred to as a single-power simultaneous discharge mode.

In the hybrid-power simultaneous discharge mode, under the control of the controller 161, the charger 1311 is enabled by the control signal SCe to control the transistor switches M25, M26 to remain operating, and all the series circuits 133 turn on the battery switches SWb thereof but remain the charging switches SWc thereof off. Therefore, the external power Ipo is supplied to the system circuit 110 at the same time as the power Idc supplied by all the batteries Bat.

In some implementation patterns, each of the foregoing transistor switches M15/M16/M17/M18/M25/M26 may be a MOSFET element or an insulated gate bipolar transistor (IGBT) element. In some examples, each of the foregoing MOSFET elements may be NMOSFET or PMOSFET.

For example, in a case of a circuit architecture shown in FIG. 5, the connection state of the charging and discharging circuit 130 of the electronic device 10 in various charge and discharge modes is shown in Table 1. Herein, the electronic device 10 has two series circuits 133A, 133B and two battery connectors 141, 143, and is coupled to two batteries BatA, BatB. In each series circuit 133A/133B, the MOSFET elements M1, M2/M3, M4 (that is, the charging switch SWc and the battery switch SWb) are PMOSFET, and in the discharging path PTd, the MOSFET elements are configured as MOSFET diodes D1/D2 in a diode connected manner. The path selection circuit 131 is composed of a charger 1311 and an inductor L1, and the charger 1311 has four transistor switches M15 to M18 inside.

**Table 1**

| Element | Charge and discharge mode | | | | | |
|---|---|---|---|---|---|---|
| | Sequential charge mode A | Sequential charge mode B | Simultaneous charge mode | Sequential discharge mode A | Sequential discharge mode B | Simultaneous discharge mode |
| M1 | On | Off | On | Off | Off | Off |
| M2 | On | Off | On | On | Off | On |
| D1 | Off | Off | Off | On | Off | On |
| M3 | Off | On | On | Off | Off | Off |
| M4 | Off | On | On | Off | On | On |
| D2 | Off | Off | Off | Off | On | On |
| M15 | On | On | On | Off | Off | Off |
| M16 | Operate | Operate | Operate | Off | Off | Off |
| M17 | Operate | Operate | Operate | Off | Off | Off |
| M18 | On | On | On | On | On | On |

| | | | | | | |
|---|---|---|---|---|---|---|
| *Sequential charge mode A: stage of "charging battery BatA but not actuating battery BatB". *Sequential charge mode B: stage of "charging battery BatB but not actuating battery BatA". *Sequential discharge mode A: stage of "discharging battery BatA but not actuating battery BatB". *Sequential discharge mode B: stage of "discharging battery BatB but not actuating battery BatA". | | | | | | |

In a case of a circuit architecture shown in FIG. 6, the connection state of the charging and discharging circuit 130 of the electronic device 10 in various charge and discharge modes is shown in Table 2 and Table 3. Herein, the electronic device 10 has two series circuits 133A, 133B and two battery connectors 141, 143, and is coupled to two batteries BatA, BatB. In each series circuit 133A/133B, the MOSFET elements M1, M2/M3, M4 (that is, the charging switch SWc and the battery switch SWb) are PMOSFET, and in the discharging path PTd, the MOSFET elements are configured as MOSFET diodes D1/D2 in a diode connected manner. The path selection circuit 131 is composed of a charger 1311, transistor switches M25, M26, an inductor L2, and a unidirectional control unit Dp. The transistor switches M25, M26 are PMOSFET, and the unidirectional control unit Dp is a diode.

**Table 2**

| Element | Charge and discharge mode | | |
|---|---|---|---|
| | Sequential charge mode A | Sequential charge mode B | Simultaneous charge mode |
| M1 | On | Off | On |
| M2 | On | Off | On |
| D1 | Off | Off | Off |
| M3 | Off | On | On |
| M4 | Off | On | On |
| D2 | Off | Off | Off |
| M25 | Operate | Operate/On | Operate |
| M26 | Operate | Operate | Operate |

| | | | |
|---|---|---|---|
| *Sequential charge mode A: stage of "charging battery BatA but not actuating battery BatB". *Sequential charge mode B: stage of "charging battery BatB but not actuating battery BatA". | | | |

**Table 3**

| Element | Charge and discharge mode | | | | | |
|---|---|---|---|---|---|---|
| | Single-power sequential discharge mode A | Single-power sequential discharge mode B | Single-power simultaneous discharge mode | Hybrid-power sequential discharge mode A | Hybrid-power sequential discharge mode B | Hybrid-power simultaneous discharge mode |
| M1 | Off | Off | Off | Off | Off | Off |
| M2 | On | Off | On | On | Off | On |
| D1 | On | Off | On | On | Off | On |
| M3 | Off | Off | Off | Off | Off | Off |
| M4 | Off | On | On | Off | On | On |
| D2 | Off | On | On | Off | On | On |
| M25 | Off | Off | Off | Operate | Operate | Operate |
| M26 | Off | Off | Off | Operate | Operate | Operate |

| | | | | | | |
|---|---|---|---|---|---|---|
| *Single-power sequential discharge mode A: stage of "discharging battery BatA but not actuating battery BatB, and not supplying power from external power Ipo". *Single-power sequential discharge mode B: stage of "discharging battery BatB but not actuating battery BatA, and not supplying power from external power Ipo". *Single-power simultaneous discharge mode: supplying power from battery BatA and battery BatB, but not supplying power from external power Ipo. *Hybrid-power sequential discharge mode A: stage of "supplying power from battery BatA and external power Ipo simultaneously, but not actuating battery BatB". *Hybrid-power sequential discharge mode B: stage of "supplying power from battery BatB and external power Ipo simultaneously, but not actuating battery BatA". *Hybrid-power simultaneous discharge mode: supplying power from battery BatA, battery BatB and external power Ipo simultaneously. | | | | | | |

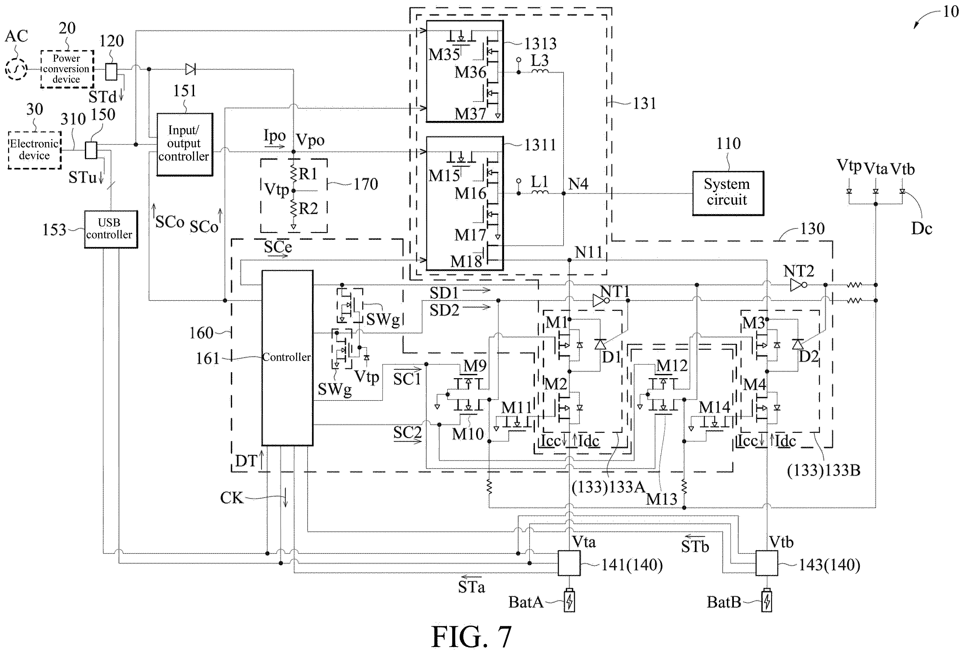

In some embodiments, referring to FIG. 7, the controller 161 is further coupled to each battery connector 140, and reads battery information DT of the battery Bat coupled thereto via each battery connector 140 based on a clock signal CK from the battery Bat coupled thereto, thereby obtaining the electricity of the battery Bat from the battery information DT of the battery Bat.

In some implementation patterns, a clock pin and a data pin of the controller 161 are coupled to a clock pin and a data pin of each battery connector 140 respectively. Herein, each series circuit 133 is coupled to a power pin of the corresponding battery connector 140.

In some implementation patterns, a detection pin of the controller 161 is further coupled to a detection pin of each battery connector 140. Herein, the controller 161 may detect whether or not the battery Bat is coupled to the battery connector 140 by the detection pin.

In some embodiments, referring to FIG. 5 and FIG. 6, the power connector 120 may be externally connected to a power conversion device 20 and coupled to a power supply AC via the power conversion device 20. The power conversion device 20 is suitable for receiving alternating current power from the power supply AC, converting the received alternating current power into direct current power Ipo, and supplies the power Ipo to the electronic device 10 via the power connector 120. The power conversion device 20 may be a power adapter 210 (as shown in FIG. 5) or a charging dock 220 (as shown in FIG. 6).

In some embodiments, the power connector 120 may be connected to another electronic device (not shown) via a transmission line. At this moment, the another electronic device may supply direct current power Ipo to the electronic device10 via the power connector 120. In an example, the power connector 120 may be a universal serial bus (USB) connector, and the transmission line may be a USB transmission line.

In some embodiments, referring to FIG. 7, the electronic device 10 may further include a USB connector 150. Specifically, the electronic device 10 is provided with a power connector 120 and a USB connector 150 simultaneously. The USB connector 150 is externally connected to another electronic device 30 via a transmission line 310 and receives the direct current power Ipo supplied from the electronic device 30.

A power pin of the USB connector 150 is coupled to the first end of the charger 1311 via an input/output switcher 151. A clock pin and a data pin of the USB connector 150 are coupled to a USB controller 153. The clock pin and the data pin of the USB controller 153 are coupled to a clock pin and a data pin of the controller 161 respectively. Accordingly, when the USB connector 150 receives the external power Ipo, the controller 161 may obtain power information related to the external power Ipo via the clock pins and the data pins of the USB controller 153 and the USB connector 150.

In some embodiments, the path selection circuit 131 may further include an on-the-go (OTG) output circuit 1313 and is controlled by the controller 161. A first end of the OTG output circuit 1313 is coupled to the power pin of the USB connector 150. A second end of the OTG output circuit 1313 is coupled to the contact N4 via an inductor L3. A control end of the OTG output circuit 1313 is coupled to the controller 161. The OTG output circuit 1313 receives a control signal from the controller 161 and selectively connects the first end to the second end according to the control signal.

Accordingly, when the another electronic device 30 (not shown) is externally connected to the USB connector 150, the battery Bat may supply power to an external electronic device via the battery connector 140, the series circuit 133, the charger 1311, the OTG output circuit 1313, and the USB connector 150.

In an implementation pattern, the OTG output circuit 1313 may include a plurality of transistor switches M35 to M37. The transistor switches M35, M36 are sequentially connected in series between the first end and the second end, and the transistor switch M37 is coupled between the second end and the ground. In an example, the OTG output circuit 1313 is implemented by an OTG wafer.

When the battery Bat is used for supplying power to the external electronic device, the charger 1311 is enabled by the control signal SCe from the controller 161 to turn on the transistor switch M18, and the OTG output circuit 1313 is enabled by a control signal SCo from the controller 161 to turn on the transistor switch M35, and drives the transistor switches M36, M37 to operate. For example, the OTG output circuit 1313 controls the on-off of the transistor switches M36, M37 in the PWM or PFM manner, thereby adjusting the voltage outputted by the transistor switches M36, M37.

In addition, the charging switch SWc of any or all of the series circuits 133 is turned off in response to the on-off signal SM1 and the battery switch SWb and the discharging path PTd thereof are turned on in response to the on-off signals SM2, SD. Therefore, the battery Bat may supply power to an external electronic device via the battery connector 140, the series circuit 133, the charger 1311, the OTG output circuit 1313, and the USB connector 150.

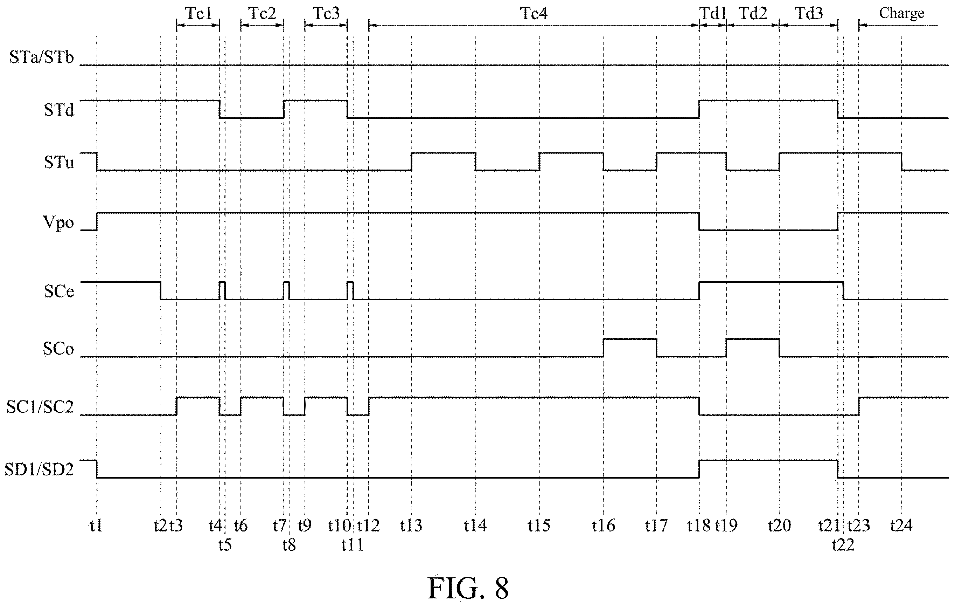

In a case of a circuit architecture shown in FIG. 7, a signal timing diagram of the electronic device 10 is shown in FIG. 8 in response to the change of an external connection state between the power connector 120 and the USB connector 150. Herein, the electronic device 10 has two series circuits 133A, 133B and two battery connectors 141, 143, and is coupled to two batteries BatA, BatB. In each series circuit 133A/133B, the MOSFET elements M1, M2/M3, M4 (that is, the charging switch SWc and the battery switch SWb) are PMOSFET, and in the discharging path PTd, the MOSFET elements are configured as MOSFET diodes D1/D2 in a diode connected manner. The path selection circuit 131 is composed of a charger 1311, an OTG wafer (that is, the OTG output circuit 1313), and inductors L1, L3. In addition, the charger 1311 has four transistor switches M15 to M18 inside, and the OTG wafer has three transistor switches M35 to M37 inside. In addition, the electronic device 10 charges the two batteries BatA, BatB in the simultaneous charge mode and discharges the two batteries BatA, BatB in the simultaneous discharge mode.

Since the two batteries BatA, BatB remain coupled to the corresponding battery connectors 141, 143, detection signals STa, STb of the two batteries BatA, BatB will be the same and remain at a low level continuously (that is, the corresponding battery connector 140 is coupled to the battery Bat). Therefore, only one of the detection signals STa, STb in the signal timing diagram is drawn for illustration. In addition, since the signal changes of the control signals SC1, SC2 are identical, only one of the control signals SC1, SC2 in the signal timing diagram is drawn for illustration. Similarly, since the signal changes of the on-off signals SD1, SD2 are identical, only one of the on-off signals SD1, SD2 in the signal timing diagram is drawn for illustration.

A voltage signal Vpo is the level of the power Ipo inputted to the charger 1311. When the voltage signal Vpo is at a high level, the power Ipo is inputted to the charger 1311. Conversely, when the voltage signal Vpo is at a low level, no power Ipo is inputted to the charger 1311. The level of a detection signal STd indicates a connection state in which the power connector 120 is externally connected to the power supply AC. When the detection signal STd is at a high level, no power supply AC is connected, that is, the power Ipo is not received. Conversely, when the detection signal STd is at a low level, the power supply AC is connected, that is, the power Ipo is received. The level of a detection signal STu indicates a connection state in which the USB connector 150 is externally connected to another electronic device. When the detection signal STu is at a high level, no another electronic device is connected. Conversely, when the detection signal STu is at a low level, another electronic device is connected.

At time points t1 to t24, the external connection state between the power connector 120 and the USB connector 150 changes as shown in Table 4 below.

**Table 4**

| Time point | Event |
|---|---|
| Initial | The power connector 120 is not connected to any device externally, and the USB connector 150 is not connected to any device externally. Therefore, no external power Ipo is inputted to the electronic device 10, that is, the charger 1311 does not receive the power Ipo. The MOSFET elements M2, M4 are turned on, and the MOSFET elements M1, M3 are turned off. At this moment, the batteries BatA, BatB are discharged to the system circuit 110 in parallel. |
| t1 | The USB connector 150 is inserted into the another electronic device 30. The inserted electronic device 30 is detected to be a power delivery (PD) device. The power Ipo is inputted to the charger 1311. |
| t2 | The charger 1311 is enabled. |
| t3 | The MOSFET elements M1, M2 are turned on. At this moment, the power Ipo is inputted via the USB connector 150, that is, comes from the PD device. |
| t4 | The power connector 120 is externally connected to the charging dock (that is, the power conversion device 20). The charger 1311 is disabled due to the change of the power Ipo. The MOSFET elements M1, M2 are turned off. |
| t5 | The charger 1311 is enabled. At this moment, the power Ipo is inputted via the power connector 120, that is, comes from the charging dock. |
| t6 | The MOSFET elements M1, M2 are turned on. |
| t7 | The charging dock to which the power connector 120 is connected is removed. The charger 1311 is disabled due to the change of the power Ipo. The MOSFET elements M1, M2 are turned off. |
| t8 | The charger 1311 is enabled. At this moment, the power Ipo is inputted via the USB connector 150, that is, comes from the PD device. |
| t9 | The MOSFET elements M1, M2 are turned on. |
| 110 | The power connector 120 is externally connected to the charging dock. The charger 1311 is disabled due to the change of the power Ipo. The MOSFET elements M1, M2 are turned off. |
| t11 | The charger 1311 is enabled. At this moment, the power Ipo is inputted via the power connector 120, that is, comes from the charging dock. |
| t12 | The MOSFET elements M1, M2 are turned on. |
| Period | The power Ipo is inputted simultaneously via the power connector 120 and the USB connector 150, and the charger 1311 is enabled. Therefore, the power Ipo is inputted to the charger 1311, the MOSFET elements M1, M2 are turned on, and the MOSFET elements M3, M4 are turned off. |
| t13 | The charging dock to which the USB connector 150 is connected is removed. |
| t14 | The USB connector 150 is inserted into the another electronic device 30. |
| t15 | The electronic device 30 to which the USB connector 150 is connected is removed. |
| t16 | The USB connector 150 is inserted into the another electronic device 30 again. The inserted electronic device 30 is detected to be an OTG device. The input/output switcher 151 and the OTG wafer (that is, the OTG output circuit 1313) are enabled. |
| t17 | The OTG device to which the USB connector 150 is connected is removed. The input/output switcher 151 and the OTG wafer are disabled. |
| t18 | The OTG device to which the power connector 120 is connected is removed. No power Ipo is inputted to the charger 1311. The MOSFET elements M1, M3 are turned off, and the MOSFET elements M2, M4 are turned on. At this moment, the batteries BatA, BatB are discharged to the system circuit 110 in parallel. |
| t19 | The USB connector 150 is inserted into the another electronic device 30 again. The inserted electronic device 30 is detected to be an OTG device. The input/output switcher 151 and the OTG wafer are enabled. |
| t20 | The OTG device to which the USB connector 150 is connected is removed. The input/output switcher 151 and the OTG wafer are disabled. |
| t21 | The power connector 120 is externally connected to the charging dock. The power Ipo is inputted to the charger 1311. The MOSFET elements M1, M3 are turned off. |
| t22 | The charger 1311 is enabled. The power Ipo is inputted via the power connector 120, that is, comes from the power supply AC. |
| t23 | The MOSFET elements M1, M2 are turned on. |
| t24 | The USB connector 150 is inserted into the another electronic device 30 again |

The time points t3 to t4, t6 to t7, t9 to t10, and t12 to t18 are the charging periods Tc1, Tc2, Tc3, Tc4 in which the battery Bat is charged by the power Ipo. The time points t18 to t19 and t20 to t21 are the discharging periods Td1, Td3 in which the battery Bat supplies power to the system circuit 110. The time points t19 to t20 are the discharging period Td2 in which the battery Bat supplies power to the another electronic device to which the system circuit 110 and the USB connector 150 are connected.

It is to be understood that, for the convenience of illustration, charging power Icc and discharging power Idc of each battery Bat are simultaneously drawn in the diagram. However, in actual operation, the charging power Icc and the discharging power Idc of the same battery Bat do not appear at the same time, but the charging power Icc or the discharging power Idc correspondingly appears in response to the charge and discharge mode currently implemented for the battery Bat being a charge mode or a power supply mode.

In some embodiments, the foregoing electronic device 10 may be a smart phone, a navigator (PND), a digital photo frame (PDF), an e-book, a notebook, a Tablet or Pad, etc.

In some embodiments, the foregoing electronic device 30 may be an OTG device or a PD device, etc. For example, the electronic device 30 may be a handheld electronic device, a personal computer, a car cigarette lighter, a household appliance, etc. The handheld electronic device may be a smart phone, a PND, a notebook, a Tablet or Pad, etc.

In some embodiments, the charger 1311 may be implemented by a charger wafer (Charger IC).

In some embodiments, the controller 161 may be implemented by a micro processing unit, a micro control unit, or an embedded controller, etc.

To sum up, the electronic device 10 according to any one embodiment may achieve charging and discharging functions by most common paths, and may be applied to a plurality of charge and discharge modes simultaneously, so as to select and work in one of the charge and discharge modes according to use demands or switch to work in a suitable charge and discharge mode according to the change of a use environment. In addition, the electronic device 10 may simplify the circuit architecture of the charging and discharging circuit 130 for the batteries Bat. In some embodiments, the electronic device 10 may be applied to operation on a hybrid-power discharge mode for the batteries Bat. In some embodiments, the electronic device 10 may simultaneously monitor an input power (that is, the external power Ipo) and the charging and discharging operations of the batteries Bat.

## Claims

1. An electronic device (10), comprising:
a system circuit (110);
a power connector (120), configured to receive power (Ipo);
a path selection circuit (131), coupled to the system circuit (110) and the power connector (120);
a plurality of battery connectors (140; 141, 143), configured to respectively couple a plurality of batteries (Bat; BatA, BatB);
a plurality of series circuits (133; 133A, 133B), respectively corresponding to the battery connectors (140; 141, 143), wherein each of the plurality of series circuits (133; 133A, 133B) is connected between the corresponding battery connector (140; 141; 143) and the path selection circuit (131) and comprises a charging switch (SWc), a battery switch (SWb) and a discharging path (PTd), the charging switch (SWc) and the battery switch (SWb) is connected in series between the path selection circuit (131) and the corresponding battery connector (140; 141; 143), and the discharging path (PTd) bridges across the charging switch (SWc); and
a control circuit (160), coupled to the path selection circuit (131) and each of the plurality of series circuits (133; 133A, 133B), configured to control a connection state of the path selection circuit (131) and to control the charging switch (SWc) and the battery switch (SWb) of each of the plurality of series circuits (133; 133A, 133B),
wherein the control circuit (160) is further configured to, in a sequential discharge mode, control the path selection circuit (131) to connect the series circuits (133; 133A, 133B) to the system circuit (110), and control the series circuits (133; 133A, 133B) to turn on the battery switch (SWb) thereof in turn and to remain the remaining battery switches (SWb) and all the charging switches (SWc) of the plurality of series circuits (133; 133A, 133B) off.

2. The electronic device (10) according to claim 1, wherein the control circuit (160) is further configured to, in the sequential discharge mode, control the path selection circuit (131) to connect the power connector (120) to the system circuit (110).

3. The electronic device (10) according to claim 1, wherein the control circuit (160) is further configured to, in a simultaneous discharge mode, control the battery switch (SWb) of each of the plurality of series circuits (133; 133A, 133B) to be turned on, control the charging switch (SWc) of each of the plurality of series circuits (133; 133A, 133B) to be turned off, and control the path selection circuit (131) to connect the series circuits (133; 133A, 133B) to the system circuit (110).

4. The electronic device (10) according to claim 3, wherein the control circuit (160) is further configured to, firstly work in the sequential discharge mode until the electricity of the batteries (Bat; BatA, BatB) satisfies a specified electricity, and then work in the simultaneous discharge mode when the electricity of the batteries (Bat; BatA, BatB) satisfies the specified electricity.

5. The electronic device (10) according to claim 3, wherein the control circuit (160) is further configured to, in the simultaneous discharge mode, control the path selection circuit (131) to connect the power connector (120) to the system circuit (110).

6. The electronic device (10) according to claim 1, wherein the control circuit (160) is further configured to, in a sequential charge mode, control the series circuits (133; 133A, 133B) to turn on the charging switch (SWc) and the battery switch (SWb) thereof in turn, and control the path selection circuit (131) to connect the series circuits (133; 133A, 133B) to the external power.

7. The electronic device (10) according to claim 1, wherein the control circuit (160) is further configured to, in a simultaneous charge mode, turn on the charging switch (SWc) and the battery switch (SWb) of each of the plurality of series circuits (133; 133A, 133B), and control the path selection circuit (131) to connect the series circuits (133; 133A, 133B) to the power connector (120).

8. The electronic device (10) according to claim 7, wherein the batteries (Bat; BatA, BatB) have different electricity, the control circuit (160) is further configured to, firstly work in a sequential charge mode until the batteries (Bat; BatA, BatB) have the same electricity and then work in the simultaneous charge mode when the batteries (Bat; BatA, BatB) have the same electricity, and in the sequential charge mode, control the series circuits (133; 133A, 133B) to turn on the charging switch (SWc) and the battery switch (SWb) thereof in turn and control the path selection circuit (131) to connect the series circuits (133; 133A, 133B) to the external power.

9. The electronic device (10) according to claim 1, further comprising:
a USB connector (150), connected to the path selection circuit (131), configured to receive another external power (Ipo).

10. The electronic device (10) according to claim 1, wherein the discharging path (PTd) is a discharging switch (SWd), the discharging switch (SWd) bridges across the charging switch (SWc), and the discharging switch (SWd) is controlled by the control circuit (160).

11. The electronic device (10) according to claim 10, wherein the discharging switch (SWd) is a metal-oxide-semiconductor field-effect transistor element, a bipolar junction transistor, a relay or a metal-oxide-semiconductor field-effect transistor diode (D1; D2).

12. The electronic device (10) according to claim 1, wherein the discharging path (PTd) is a unidirectional control unit, the unidirectional control unit bridges across the charging switch (SWc), and a reverse end of the unidirectional control unit is adjacent to the path selection circuit (131).

13. The electronic device (10) according to claim 1, wherein the control circuit (160) comprises a controller (161), and the controller (161) is coupled to the path selection circuit (131) and electrically connected to each of the plurality of series circuits (133; 133A, 133B), and is configured to control a connection state of the path selection circuit (131) and control the charging switch (SWc) and the battery switch (SWb) of each of the plurality of series circuits (133; 133A, 133B).

14. The electronic device (10) according to claim 1, wherein the path selection circuit (131) comprises a charger (1311), the power connector (120) is coupled to the system circuit (110) via the charger (1311), and the system circuit (110) is coupled to each of the plurality of series circuits (133; 133A, 133B) via the charger (1311).

15. The electronic device (10) according to claim 1, wherein the path selection circuit (131) comprises a charger (1311), two transistor switches (M25, M26) and a unidirectional control unit (Dp), the charger (1311) is coupled to control ends of the two transistor switches (M25, M26), first ends of the two transistor switches (M25, M26) are coupled to a first end of each of the plurality of series circuits (133; 133A, 133B), the first ends of the two transistor switches (M25, M26) are coupled to the system circuit (110) via the unidirectional control unit (Dp)', and second ends of the two transistor switches (M25, M26) are respectively coupled to a contact (N5) between the power connector (120) and the system circuit (110) and a ground.
